**Europäisches Patentamt**

**European Patent Office**

**Office européen des brevets**

(19)

(11) Publication number : **0 382 277 B1**

(12)

# EUROPEAN PATENT SPECIFICATION

(45) Date of publication of patent specification :
01.12.93 Bulletin 93/48

(51) Int. Cl.⁵ : **C08L 77/02, C08L 77/06**

(21) Application number : **90200176.7**

(22) Date of filing : **24.01.90**

(54) **Polyamide resin composition.**

The file contains technical information
submitted after the application was filed and
not included in this specification

(56) References cited :
**PATENT ABSTRACTS OF JAPAN, vol. 10, no.
230 (C-365)[2286], 9th August 1986; & JP-A-61
64 751**

(30) Priority : **04.02.89 NL 8900278**

(73) Proprietor : **DSM N.V.**
**Het Overloon 1**
**NL-6411 TE Heerlen (NL)**

(43) Date of publication of application :
**16.08.90 Bulletin 90/33**

(72) Inventor : **Bakker, Reinier Geleyn**
**Zirkstrasse 13**
**B-2000 Antwerpen (BE)**
Inventor : **Statnik, Wilhelmus Hubertus**
**Jozephus Maria**
**Prof. Mentenlaan 37**
**NL-6141 LN Sittard (NL)**

(45) Publication of the grant of the patent :
**01.12.93 Bulletin 93/48**

(84) Designated Contracting States :
**AT BE CH DE DK ES FR GB IT LI NL SE**

Jouve, 18, rue Saint-Denis, 75001 PARIS

EP 0 382 277 B1

EP 0 382 277 B1

## Description

The invention relates to a polyamide resin composition containing polyamide-6 and polyamide-4,6.

Such a composition is known from JP-A-61064751. According to this Japanese patent publication it is possible to obtain polyamide resin compositions with unexpectedly good properties, viz. better than to be predicted from the proportional contributions of the separate components, by blending these constituent polyamides in the melt in the various weight ratios. In the examples (1-3) from said publication, polyamide-4,6 and polyamide-6 are blended for that purpose in an injection moulding machine with 65-mm screw and moulded to form tablets.

However, a careful review of these examples, using a wide variety of commercially available grades of polyamide-6 and polyamide-4,6 in different compositions, under different process conditions does not produce compositions having the said superior mechanical properties. Apparently, in order to achieve this result, a non-disclosed parameter is essential.

The object of the invention, therefore, is to discover this essential parameter and to reproducibly obtain polyamide-4,6/polyamide-6 resin compositions with superior properties.

It has now been found that polyamide-4,6/polyamide-6 resin compositions having reproducible superior properties can be obtained if the polyamide resin composition contains an excess of terminal amino groups over the terminal carboxyl groups.

The polyamide-4,6/polyamide-6 resin compositions according to the invention are characterized in that the number of terminal amino groups in the composition is larger than the number of terminal carboxyl groups. The number of terminal amino groups is preferably at least twice as large as the the number of terminal carboxyl groups.

The best mechanical properties are obtained with compositions in which the content of terminal amino groups is at least four times as large as the content of terminal carboxyl groups.

The content of terminal amino groups and of terminal carboxyl groups can be determined by means of various techniques known per se. Particularly suitable methods are, for terminal amino groups, potentiometric titration of a polyamide solution in phenol with hydrochloric acid in a mixture of glycol and phenol at elevated temperature and, for terminal carboxyl groups, potentiometric titration of a polyamide solution and an ortho cresol/benzyl alcohol mixture with tetrabutylammoniumhydroxide in a mixture of 2-propanol and methanol at elevated temperature.

In order to obtain good mechanical properties it is important also that the degree of polymerization of the composition should be sufficiently high. It is preferably expressed in terms of relative viscosity, $\eta_{rel}$, which is at least 2.0, preferably 2.5 and even more preferably at least 2.8 (the relative viscosity measured on solutions of 1 gramme polyamide in 100 ml 96% (wt) sulphuric acid at 25¤C).

The polyamide-4,6 of the composition according to the invention is a polyamide substantially containing tetramethyleneadipamide units. Substantially means that the content of tetramethyleneadipamide units is at least 60%. In addition, the polyamide-4,6 may contain other polyamide, polyester or polyimide-forming units, for instance units derived from lactams, units obtained by reaction of diamines, for instance aliphatic diamines, such as hexamethylene diamine and tetramethylene diamine, with dicarboxylic acids, for instance aliphatic or aromatic dicarboxylic acids, such as adipic acid and sebacic acid and terephthalic acid and isophthalic acid, units derived from butylterephthalate and units derived from pyromellitic acid dianhydride. The polyamide-6 according to the invention is a polyamide substantially containing caproamide units and capable also of containing the units mentioned above for polyamide-4,6.

The content of tetramethyleneadipamide units in the polyamide-4,6 and of caproamide units in the polyamide-6 is preferably at least 80%. The use of other chain units is determined particularly by the properties to be added to the polyamide-4,6/polyamide-6 resin composition or by the modification of properties. Thus by the incorporation, for instance, of aromatic chain units the affinity to water can be strongly reduced and incorporation of imine chain units provides a greater stiffness. The presence of these deviating chain units does not, however, adversely affect the essence of the invention, which lies in the presence of an excess of terminal amino groups in the polyamide resin composition.

Polyamide-6 is obtained by anionic or hydrolytic polymerization starting from epsilon caprolactam. For the preparation of chips and granulate used for the preparation of resin compositions, the cationic preparation process is usually applied. This preparation process is described, inter alia, in Chemie und Technologie der Kunststoffe, Band II, Ch. XVII Geest & Portig K.G., Leipzig 1963, and Plastic Materials by J.A. Brydson, Ch. 15, D. Van Nostrand Company Inc. Princeton. In order to regulate the molecular weight, a small amount of acid, for instance acetic acid or benzoic acid, is added to the polymerization mixture, in consequence of which an excess of terminal acid groups is present in the resulting polyamide.

Likewise, in the preparation of polyamide-4,6, described in, inter alia, EP-B-0039524 and EP-B-0038094, there is also a big chance of obtaining a polymer with an excess of terminal acid groups, pyrrolydine being

2

formed during the polycondensation process from terminal amino groups.

For the preparation of the polyamide-4,6/polyamide-6 compositions with reproducible superior properties, special measures must therefore be taken.

One process consists in polyamide-4,6 and polyamide-6, both containing an excess of terminal amino groups, being blended in the melt. However, this process implies that the choice of raw materials is limited. In the preparation of polyamide-6, an amine must be used for that purpose instead of an acid chain regulator, and in the preparation of polyamide-4,6, too, extra terminal amino groups must be introduced. The latter, however, has an adverse effect on the degree and rate of polymerization to be realized. It will suffice also to blend polyamine-4,6 and polyamide-6 in the melt if just one of these components contains such an excess of terminal amino groups that the overall content of terminal amino groups of the composition exceeds the content of terminal carboxyl groups. In this last-mentioned case preference is given to choosing a polyamide-6 with an excess of terminal amino groups.

A process for preparing the polyamide-4,6/polyamide-6 resin composition with reproducibly superior properties according to the invention by melt blending of polyamide-4,6 and polyamide-6 is characterized in that at least one of the polyamides has such an excess of terminal amino groups that the total content of terminal amino groups of the resin composition exceeds the content of terminal carboxyl groups.

Preference, however, is given to a process in which a reproducible result is achieved independently of the terminal group content of the starting polyamides. Such a process is obtained by the presence of an amine during the melt blending. This amine can be added to the polyamide resins during or before the melt blending. Preferably it is supplied to the melt blending device simultaneously with the polyamide resins.

This process for preparing the polyamide-4,6/polyamide-6 resin composition with reproducibly superior properties by blending polyamide-4,6 and polyamide-6 in the melt, is characterized in that the melt blending is carried out in the presence of an amine.

Preference is given to the use of a primary or a secondary amine, most preference is given to primary amines.

The primary amine is preferably a mono or diamine. Tri or even higher amines are also effective, but these have the side effect of a possible occurrence of crosslinking, in consequence of which the melt viscosity of the resin composition is increased and the processing characteristics are adversely affected.

For practical reasons preference is given to the use of high-boiling amines, for instance hexamethylenediamine and dodecylamine, but amines with lower boiling temperatures can be used also. The use of amines with long carbon chains further has the advantage of a good release of the polyamide composition from the mould in the processing.

The concentration of the amine to be added is not critical and may range within wide limits. Good results are achieved when concentrations are used of between 0.01 and 5% (wt) calculated on the total weight of the resin composition.

The lower limit is determined to a considerable degree by the imbalance of terminal amine and carboxyl groups in the polyamide-4,6 and polyamide-6 supplied. Higher concentrations make little sense, because these may give rise to problems in the processing, such as the emission of amine during the processing.

If so desired, a substance may be present during the melt blending to increase the velocity of the amidation reactions. Such a substance is, for instance, boric acid. The chosen concentrations of these substances that promote the transamidation are generally low, for instance 0.01-0.5% (wt), preferably 0.02-0.3% (wt) calculated on the total polyamide resin composition.

The process for preparing the polyamide resin composition according to the invention can be carried out in any accepted melt blending device, for instance Banbury mixers, and extruders. The melt blending is preferably carried out in an inert atmosphere.

The amine can be added to the polyamide-4,6/polyamide-6 composition in many customary ways. Preference is given to incorporation in a finely distributed form, for instance in the form of a powder, into one of the polyamides, preferably the polyamide-6, before being fed to the melt blending device.

The concentration ratio between polyamide-4,6 and polyamide-6 in the resin composition may range within very wide limits and in principle comprises any composition in which a significant amount, for instance 0.5% (wt), of one polyamide occurs side by side with the other.

Polyamide-4,6/polyamide-6 compositions obtained by applying the said processes form part of this invention.

To the polyamide compositions can further be added, if so desired, the usual additives, for instance stabilizers, flame retardants, colourants, pigments and fillers, reinforcing materials, for instance organic and inorganic fibrous materials or plate-shaped materials, examples of these are aramid fibres, fibres of liquid crystalline polymers, glass fibre and mica, and other polymers, for instance impact modifiers, examples of these are modified or non-modified rubbers, such as olefin copolymers, in principle all polymers qualify for being added, if so desired, to the polyamide composition according to the invention.

The invention is now further elucidated by means of the following examples without, however, being limited thereto.

Preparation of the polyamide-4,6/polyamide-6 compositions

The preparation was based on trade products all of them characterized in an identical manner.

Starting materials

- polyamide-6

|  | $\eta_{rel}$ | meq/g -NH$_2$ | meq/g -COOH | Producer |
|---|---|---|---|---|
| 1 | 2.4 | 0.051 | 0.065 | ENKA, Netherlands |
| 2 | 3.3 | 0.031 | 0.045 | ENKA, Netherlands |
| 3 | 3.5 | 0.030 | 0.046 | BASF, Germany |
| 4 | 3.5 | 0.035 | 0.042 | BASF, Germany |
| 5 | 2.9 | 0.051 | 0.055 | Beaulieu, France |
| 6 | 2.9 | 0.062 | 0.021 | Allied, USA |
| 7 | 2.8 | 0.037 | 0.041 | Rhone Poulenc, France |

- polyamide-4,6
  STANYL TW300; $\eta_{rel}$ = 3.1; -NH$_2$ = 0.008 meq/g; -COOH = 0.040 meq/g, of the firm of DSM, Netherlands.
- hexanediamine: chemically pure
- dodecylamine: chemically pure
- boric acid: chemically pure

Characterization methods

- relative viscosity, $\eta_{rel}$, 1 g polyamide in 100 ml 96% (wt) H$_2$SO$_4$ in water at 25¤C.
- HDT, dimensional stability under heat: according to ASTM 648, 1.8 MPa.
- modulus of elasticity Emod, according to ASTM D 790.
- torsion pendulum modulus, G', measured from -40 to 200¤C with heating rate of 1¤C/minute, and at c. 1 Hz.

Comparative example A

On a Werner and Pfleiderer ZSK 57 co-rotating twin screw extruder, diameter 57 mm, was extruded a mixture of 40 parts by weight polyamide-4,6 and 60 parts by weight polyamide-6 (polyamide-6, no. 7) using different screw designs, speeds and temperatures. Of the granulate obtained test bars were injection-moulded under identical conditions, melting temperature 315¤C and mould temperature 80¤C, on which test bars the mechanical properties were measured. The granulate was discoloured in all cases. Circumstances and results are mentioned in table 1 below.

T A B L E    1

Extrusion conditions                                                    Result

| Speed | Kneading sections | | temperature | HDT |
|---|---|---|---|---|
| RPM | number | length* | set, ¤C | ¤C |
| 250 | 1 | 4D | 290–300 | 70 |
| 250 | 1 | 12D | 290–300 | 72 |
| 250 | 2 | 12D | 290–300 | 72 |
| 250 | 1 | 20D | 290–300 | 74 |
| 100 | 1 | 20D | 290–300 | 73 |
| 100 | 1 | 20D | 290–300 | 75 |
| 250 | 1 | 20D | 270–280 | 75 |

*) D = extruder diameter.

The kneading sections are followed by transport sections and a venting section, upon which some pressure is built up again for extrusion purposes. On the basis of the additivity of properties of polyamide-6 and polyamide-4,6, HDT respectively 65 and 110¤C, a HDT of at least 85¤C was to be expected for these compositions.

Comparative example B

On a Werner and Pfleiderer ZSK 30 co-rotating twin screw extruder, polyamide-6/polyamide-4,6 compositions were processed to form granulate. Set values: temperature 290-300¤C, screw speed 250 RPM, kneading section 20D, total length 28 D.
The various compositions and results are mentioned in Table 2.

T A B L E   2

| Exp. no. | polyamide-6 no. | 6/4,6 wt ratio | HDT ¤C | G' 108 N/mm² 120¤C | 140¤C | Emod N/mm² |
|---|---|---|---|---|---|---|
| 1 | 1 | 90 : 10 | 57 | 1.45 | 1,15 | 2725 |
| 2 | 2 | 90 : 10 | 56 | 1.3 | 1.05 | 2855 |
| 3 | | 80 : 20 | 59 | 1.4 | 1.15 | 2875 |
| 4 | 3 | 75 : 25 | 68 | 1.45 | 1.17 | 2917 |
| 5 | | 25 : 75 | 85 | 2.15 | 1.65 | 2953 |
| 6 | 4 | 75 : 25 | 64 | 1.5 | 1.16 | 2769 |
| 7 | | 25 : 75 | 76 | 2.15 | 1.6 | 2862 |
| 8 | 5 | 100 | 65 | 1.42 | 1.18 | 2980 |
| 9 | 7 | 60 : 40 | 72 | 1.6 | 1.4 | |
| 10 | | 40 : 60 | 83 | 1.75 | 1.55 | |
| 11 | - | 0 : 100 | 110 | 2.8 | 2.30 | 3200 |

These experiments once again show that there is no question of synergy in respect of the mechanical properties.

Example 1 and comparative example C

On the twin screw extruder of comparative example B polyamide no. 6 was blended with polyamide-4,6. Of the resulting granulate test bars were injection-moulded in the same way as in the preceding comparative examples, and the mechanical properties were determined.

| exp. no. | 6/4,6 wt ratio | G' (measured) 140¤C | G' (calculated) 140¤C |
|---|---|---|---|
| 12 | 100 : 0 | 1.15 | |
| 13 | 95 : 5 | 1.2 | 1.2 |
| 14 | 90 : 10 | 1.3 | 1.25 |
| 15 | 75 : 25 | 1.35 | 1.4 |
| 16 | 50 : 50 | 1.35 | 2.0 |
| 17 | 25 : 75 | 1.7 | 2.6 |
| 18 | 10 : 90 | 1.95 | 2.7 |
| 19 | 5 : 95 | 2.2 | 2.25 |
| 20 | 0 : 100 | 2.3 | |

This experiment shows that the torsion pendulum modulus of compositions of up to about 25% (wt) polyamide-4,6 corresponds with the value calculated on the basis of proportional contributions of the two polyamides. Analyses of the compositions show that the compositions with a low polyamide-6 content still contain an

EP 0 382 277 B1

excess of terminal amino groups.

<u>Example II</u>

To the extruder of comparative example B 60 parts by weight polyamide-6 (no. 7) and 40 parts by weight polyamide-4,6, with varying amounts of a mono or diamine, respectively dodecylamine and hexanediamine, were supplied. In a few cases 0.1 part by weight boric acid was added also. Of the resulting granulate, test bars were injection moulded in the same way as in preceding experiments, on which test bars the mechanical properties were determined.

| exp. no. | 6/4,6 wt ratio | boric acid % (wt) | DA % (wt) | HD % (wt) | HDT 140¤C |
|---|---|---|---|---|---|
| 21 | 60 : 40 | 0 | 0 | 0 | 72 |
| 22 | | 0 | 0.2 | 0 | 82 |
| 23 | | 0 | 0.5 | 0 | 83 |
| 24 | | 0 | 1.0 | 0 | 86 |
| 25 | | 0 | 0 | 0.2 | 80 |
| 26 | | 0 | 0 | 0.5 | 83 |
| 27 | | 0 | 0 | 1.0 | 95 |
| 28 | | 0.1 | 0 | 0.2 | 83 |

These experiments clearly show the positive effect of the addition of amine on the mechanical properties of the polyamide composition.

The colour of the compositions containing extra amine was white.

**Claims**

1.  Polyamide-4,6/polyamide-6 resin composition, having a relation viscosity of at least 2.0 (measured on solutions of 1g polyamide in 100ml 96 wt.% sulphuric acid at 25°C), characterized in that the number of terminal amino groups in the composition exceeds the number of terminal carboxyl groups.

2.  Polyamide-4,6/polyamide-6 resin composition having a relative viscosity of at least 2.0 (measured on solutions of 1g polyamide in 100ml 96 wt.% sulphuric acid at 25°C), characterized in that at least one amine is present in such an amount that the total number of amino groups in the composition does exceed the number of terminal carboxyl groups.

3.  Polyamide-4,6/polyamide-6 resin composition according to claim 1 or 2 characterized in that the number of amino groups is at leats twice the number of terminal carboxyl groups.

4.  Polyamide-4,6/polyamide-6 resin composition according to claim 3, characterized in that the number of amino groups is at least four times the number of terminal carboxyl groups.

5.  Polyamide-4,6/polyamide-6 resin composition according to any on of claims 1-4, characterized in that the relative viscosity is at least 2.5.

6.  Polyamide-4,6/polyamide-6 resin composition according to claim 5, characterized in that the relative viscosity is at least 2.8.

7.  Polyamide-4,6/polyamide-6 resin composition according to any one of claims 1-6, characterized in that a transamidation catalyst is present also.

7

8. Polyamide-4,6/polyamide-6 resin composition according to claim 7, characterized in that the transamidation catalyst is boric acid.

9. Polyamide-4,6/polyamide-6 resin composition according to claim 2, characterized in that the amine is a primary or a secondary amine.

10. Polyamide-4,6/polyamide-6 resin composition according to claim 9, characterized in that the primary amines are chosen from the group of mono and diamines.

11. Polyamide-4,6/polyamide-6 resin composition according to any one of claims 7-8, characterized in that the transamidation catalyst is present in a concentration of 0.01-0.5% (wt) calculated on the total polyamide resin composition.

12. Polyamide-4,6/polyamide-6 resin composition according to any one of claims 9-11, characterized in that the primary amine content is 0.01-5% (wt) calculated on the polyamide resin composition.

13. Polyamide-4,6/polyamide-6 resin composition according to any one of claims 1-12, characterized in that the polyamide-4,6 : polyamide-6 weight ratio is 0.5-99.5 : 99.5-0.5.

14. Process for preparing a polyamide-4,6/polyamide-6 resin composition by melt blending polyamide-4,6 and polyamide-6, the process being characterized in that at least one polyamide contains such an excess of terminal amino groups that the total content of terminal amino groups of the resin composition exceeds the content of terminal carboxyl groups.

15. Process for preparing a polyamide-4,6/polyamide-6 resin composition by melt blending polyamide-4,6 and polyamide-6, the process being characterized in that the melt blending is carried out in the presence of an amine in such an amount, that the number of amino groups in the composition does exceed the number of terminal carboxyl groups.

16. Process according to claim 15, characterized in that the amine is a primary or secondary amine.

17. Process according to claim 16, characterized in that the primary amine is a mono or a diamine.

18. Process according to any one of claims 14-17, characterized in that a transamidation catalyst is present also.

19. Process according to claim 18, characterized in that the transamidation catalyst is boric acid.


**Patentansprüche**

1. Polyamid-4,6/Polyamid-6-Harz-Zusammensetzung mit einer relativen Viskosität von wenigstens 2,0 (gemessen an Lösungen von 1 g Polyamid in 100 ml 96 Gew.%-iger Schwefelsäure bei 25°C), dadurch gekennzeichnet, daß die Anzahl der endständigen Aminogruppen in der Zusammensetzung die Anzahl der endständigen Carboxylgruppen übersteigt.

2. Polyamid-4,6/Polyamid-6-Harz-Zusammensetzung mit einer relativen Viskosität von wenigstens 2,0 (gemessen an Lösungen von 1 g Polyamid in 100 ml 96 Gew.%-iger Schwefelsäure bei 25°C), dadurch gekennzeichnet, daß wenigstens ein Amin in einer solchen Menge vorliegt, daß die Gesamtzahl der Aminogruppen in der Zusammensetzung die Anzahl der endständigen Carboxylgruppen übersteigt.

3. Polyamid-4,6/Polyamid-6-Harz-Zusammensetzung nach Anspruch 1 oder 2, dadurch gekennzeichnet, daß die An zahl der Aminogruppen wenigstens zweimal die Anzahl der endständigen Carboxylgruppen ist.

4. Polyamid-4, 6/Polyamid-6-Harz-Zusammensetzung nach Anspruch 3, dadurch gekennzeichnet, daß die Anzahl der Aminogruppen wenigstens viermal die Anzahl der endständigen Carboxylgruppen ist.

5. Polyamid-4,6/Polyamid-6-Harz-Zusammensetzung nach irgendeinem der Ansprüche 1-4, dadurch gekennzeichnet, daß die relative Viskosität wenigstens 2,5 beträgt.

6. Polyamid-4,6/Polyamid-6-Harz-Zusammensetzung nach Anspruch 5, dadurch gekennzeichnet, daß die relative Viskosität wenigstens 2,8 ist.

7. Polyamid-4,6/Polyamid-6-Harz-Zusammensetzung nach irgendeinem der Ansprüche 1-6, dadurch gekennzeichnet, daß auch ein Transamidierungskatalysator vorliegt.

8. Polyamid-4,6/Polyamid-6-Harz-Zusammensetzung nach Anspruch 7, dadurch gekennzeichnet, daß der Transamidierungskatalysator Borsäure ist.

9. Polyamid-4,6/Polyamid-6-Harz-Zusammensetzung nach Anspruch 2, dadurch gekennzeichnet, daß das Amin ein primäres oder ein sekundäres Amin ist.

10. Polyamid-4,6/Polyamid-6-Harz-Zusammensetzung nach Anspruch 9, dadurch gekennzeichnet, daß die primären Amine aus der Gruppe der Mono- und Diamine gewählt sind.

11. Polyamid-4,6/Polyamid-6-Harz-Zusammensetzung nach irgendeinem der Ansprüche 7-8, dadurch gekennzeichnet, daß der Transamidierungskatalysator in einer Konzentration von 0,01-0,5 Gew.-%, berechnet auf die gesamte Polyamidharz-Zusammensetzung vorliegt.

12. Polyamid-4,6/Polyamid-6-Harz-Zusammensetzung nach irgendeinem der Ansprüche 9-11, dadurch gekennzeichnet, daß der Gehalt an primärem Amin 0,01-5 Gew.-%,berechnet auf die Polyamidharz-Zusammensetzung, beträgt.

13. Polyamid-4,6/Polyamid-6-Harz-Zusammensetzung nach irgendeinem der Ansprüche 1-12, dadurch gekennzeichnet, daß das Gewichtsverhältnis Polyamid-4,6:Polyamid-6 0,5-99,5 : 99,5-0,5 beträgt.

14. Verfahren zur Herstellung einer Polyamid-4,6/Polyamid-6-Harz-Zusammensetzung durch Schmelzmischen von Polyamid-4,6 und Polyamid-6, dadurch gekennzeichnet, daß wenigstens ein Polyamid verwendet wird, das einen solchen Überschuß an endständigen Aminogruppen enthält, daß der Gesamtgehalt der endständigen Aminogruppen der Harz-Zusammensetzung den Gehalt an endständigen Carboxylgruppen übersteigt.

15. Verfahren zur Herstellung einer Polyamid-4,6/Polyamid-6-Harz-Zusammensetzung durch Schmelzmischen von Polyamid-4,6 und Polyamid-6, dadurch gekennzeichnet, daß das Schmelzmischen in Gegenwart eines Amins in solcher Menge durchgeführt wird, daß die Anzahl der Aminogruppen in der Zusammensetzung die Anzahl der endständigen Carboxylgruppen übersteigt.

16. Verfahren nach Anspruch 15, dadurch gekennzeichnet, daß das Amin ein primäres oder sekundäres Amin ist.

17. Verfahren nach Anspruch 16, dadurch gekennzeichnet, daß das primäre Amin ein Mono oder Diamin ist.

18. Verfahren nach irgendeinem der Ansprüche 14-17, dadurch gekennzeichnet, daß auch ein Transamidierungskatalysator vorliegt.

19. Verfahren nach Anspruch 18, dadurch gekennzeichnet, daß der Transamidierungskatalysator Borsäure ist.

**Revendications**

1. Composition de résine polyamide-4,6/polyamide-6 ayant une viscosité relative d'au-moins 2,0, mesurée sur des solutions de 1 g de polyamide dans 100 ml de $H_2 SO_4$ à 96% en poids à 25°C, caractérisée en ce que le nombre de groupements terminaux amine dans la composition dépasse le nombre de groupements terminaux carboxyle.

2. Composition de résine polyamide-4,6/polyamide-6 ayant une viscosité relative d'au moins 2,0, mesurée sur des solutions de 1 g de polyamide dans 100 ml de $H_2 SO_4$ à 96% en poids à 25°C, caractérisée en ce qu'au moins une amine est présente en une quantité telle que le nombre total de groupements amino dans la composition dépasse vraiment le nombre de groupements terminaux carboxyle.

3. Composition de résine polyamide-4,6/polyamide-6 selon la revendication 1 ou 2, caractérisée en ce que le nombre de groupements amino est au moins le double du nombre de groupements terminaux carboxyle.

4. Composition de résine polyamide-4,6/polyamide-6 selon la revendication 3, caractérisée en ce que le nombre de groupements amino est au moins quatre fois le nombre de groupements terminaux carboxyle.

5. Composition de résine polyamide-4,6/polyamide-6 selon l'une quelconque des revendications 1 à 4, caractérisée en ce que la viscosité relative est d'au moins 2,5.

6. Composition de résine polyamide-4,6/polyamide-6 selon la revendication 5, caractérisée en ce que la viscosité relative est d'au moins 2,8.

7. Composition de résine polyamide-4,6/polyamide-6 selon l'une quelconque des revendications 1 à 6, caractérisée en ce qu'un catalyseur de transamidation est également présent.

8. Composition de résine polyamide-4,6/polyamide-6 selon la revendication 7, caractérisée en ce que le catalyseur de transamidation est l'acide borique.

9. Composition de résine polyamide-4,6/polyamide-6 selon la revendication 2, caractérisée en ce que l'amine est une amine primaire ou une amine secondaire.

10. Composition de résine polyamide-4,6/polyamide-6 selon la revendication 9, caractérisée en ce que les amines primaires sont choisies dans le groupe des mono- et des diamines.

11. Composition de résine polyamide-4,6/polyamide-6 selon l'une quelconque des revendications 7 à 8, caractérisée en que le catalyseur de transamidation est présente en une concentration de 0,01 à 0,5% en poids calculée sur le total de la composition de résine polyamide.

12. Composition de résine polyamide-4,6/polyamide-6 selon l'une quelconque des revendications 2, 9 à 11, caractérisée en ce que la teneur en amine primaire est 0,01 à 5% en poids calculée sur la composition de résine polyamide.

13. Composition de résine polyamide-4,6/polyamide-6 selon l'une quelconque des revendications 1 à 13, caractérisée en ce que le rapport pondéral polyamide-4,6:polyamide-6 est 0,5 à 99,5:99,5 à 0,5.

14. Procédé pour préparer une composition de résine polyamide-4,6/polyamide-6 en mélangeant à l'état fondu le polyamide-4,6 et le polyamide-6, le procédé étant caractérisé en ce qu'au moins un polyamide contient un excès de groupements terminaux amino tel que la teneur totale de groupements terminaux amino de la composition de résine dépasse la teneur de groupements carboxyles terminaux.

15. Procédé pour préparer une composition de résine polyamide-4,6/polyamide-6, le procédé étant caractérisé en ce que le mélange à l'état fondu est effectué en présence d'une amine, en une quantité telle que le nombre de groupements amino dans la composition dépasse vraiment le nombre de groupements terminaux carboxyle.

16. Procédé selon la revendication 15, caractérisé en ce que l'amine est une amine primaire ou une amine secondaire.

17. Procédé selon la revendication 16, caractérisé en ce que l'amine primaire est une mono- ou une diamine.

18. Procédé selon l'une quelconque des revendications 14 à 17, caractérisé en ce qu'un catalyseur de transamidation est également présent.

19. Procédé selon la revendication 18, caractérisé en ce que le catalyseur de transamidation est l'acide borique.